# EUROPEAN PATENT APPLICATION

(11) **EP 3 418 687 A1**
(43) Date of publication of application: **26.12.2018**
(21) Application number: 18177437.3
(22) Date of filing: 13.06.2018
(51) Int. Cl.: G01C 15/00

(54) **LASER LEVELLING APPARATUS WITH AUTO LOCKING SYSTEM AND AUTO LOCKING METHOD**

(30) Priority: 20.06.2017 CN 201710469320
(71) Applicant: Robert Bosch GmbH, 70442 Stuttgart (DE)
(72) Inventor: NERAVATI, Sudhir Kumar, Hong Kong, 00000 (CN); SENECA, Ben-Hur, Hong Kong, 00000 (CN); CHAN, Wah Pong, Hong Kong, 00000 (CN); WONG, Yuenyu, Hong Kong, 00000 (CN)

(57) **Abstract**

The invention relates to a laser leveling apparatus (100) with an auto locking system (80), comprising: a housing; a pendulum assembly (50) in the housing, wherein the pendulum assembly (50) comprises a pendulum (10) and a supporting subassembly (20) supporting the pendulum (10) in the housing in such a manner that the pendulum (10) can pivot or swing relative to the housing; and the auto locking system (80) in the housing which comprises a pendulum lock (70) and an auto controller (60), wherein the pendulum lock (70) has a locking state in which the pendulum lock (70) locks the pendulum (10) in position and immobilizes the pendulum (10) and an unlocking state in which the pendulum (10) is allowed to move, and wherein the auto controller (60) places the pendulum lock (70) into the locking state automatically when the movement of the pendulum (10) goes beyond a predetermined limit. The invention also relates to an auto locking method of the laser leveling apparatus.

## Description

### Technical Field

The invention relates to a laser levelling apparatus with an auto locking system and to an auto locking method of a pendulum of the laser levelling apparatus.

### Background Art

Typically, a laser levelling apparatus is often used in a measurement field or a construction field for measuring, aligning or adjusting relative heights of target objects. Due to the particularity of the operation with the laser levelling apparatus tool, it often takes the user a few hours or even longer to complete the operation. The user has to take a break during the work.

In general, the user needs to switch off the tool before taking a break, and to do so the user has to operate a mechanical switch. However, there is a tendency that the tool will move from its position when the user operates the mechanical switch. When the user resumes to work and switches the tool on, it might move further.

However, as is known to the skilled in the art that even a small movement of the tool may result in altering the reference which has been set up before taking a break, and resetting the reference will result in additional working time.

In addition, when the tool is placed on a table or tripod, there is a risk that the tool may be impacted, pulled or pushed to move undesirably, for example by a playing child intentionally or by an adult accidentally. More than that, the tool may fall down under the impacting force, the pulling force or the pushing force. In any condition, a pendulum of the laser levelling apparatus may swing or move undesirably and will damage if it moves beyond a certain allowable range.

It is thus desired to take measures to protect the pendulum and fix the pendulum at some appropriate time under the above circumstances.

### Summary of the Invention

An object of the invention is to protect the pendulum and fix the pendulum in position in the condition that the movement of the pendulum goes beyond a certain predetermined limit.

To this end, according to an aspect of the invention, a laser leveling apparatus with an auto locking system is provided, which comprises: a housing; a pendulum assembly in the housing, wherein the pendulum assembly comprises a pendulum and a supporting subassembly supporting the pendulum in such a manner that the pendulum can pivot or swing relative to the housing; and the auto locking system in the housing which comprises a pendulum lock and an auto controller, wherein the pendulum lock has a locking state in which the pendulum lock locks the pendulum in position and immobilizes the pendulum and an unlocking state in which the pendulum is allowed to move, and wherein the auto controller places the pendulum lock into the locking state automatically when the movement of the pendulum goes beyond a predetermined limit.

According to another aspect of the invention, there is provided an auto locking method of the above laser leveling apparatus, comprising, with the auto locking system of the laser leveling apparatus, placing the pendulum lock into the locking state automatically when the movement of the pendulum goes beyond a predetermined limit.

The movement of the pendulum can be detected by an OOL sensor, and the pendulum has two OOL limits, one of which is for laser emitted from a laser emitting element mounted in the pendulum and the other is the predetermined limit. The movement of the pendulum can be detected by a MEM sensor which is configured for sensing the gravity force of the laser leveling apparatus.

With the laser leveling apparatus with the auto locking system according to the invention, the pendulum of the laser leveling apparatus can be locked promptly right after it is detected or determined that the movement of the pendulum goes beyond the predetermined limit. This allows the operation with the laser leveling apparatus can be stopped for a period of time and continued then, without losing the reference which has been used during the operation.

### Brief Description of the Drawings

The foregoing and other aspects of the invention will be understood and recognized by the skilled in the art more fully from the following detailed description taken in conjunction with the drawings, in which:
Figure 1 is an illustrative view of a laser levelling apparatus according to the invention with its housing removed; and
Figure 2 shows the detail of engagement of a transmission device and the pendulum lock in the laser levelling apparatus according to the invention.

### Detailed Description of Preferred Embodiments

According to the invention, a laser leveling apparatus is provided with an auto locking system. When a pendulum of the laser leveling apparatus is moved or tilted beyond a certain predetermined limit, the pendulum will be locked automatically in order not to lose a reference which is preset during the operation. As mentioned above, reasons which cause the movement or tilting of the pendulum may be falling of the laser leveling apparatus or an impact acted on it.

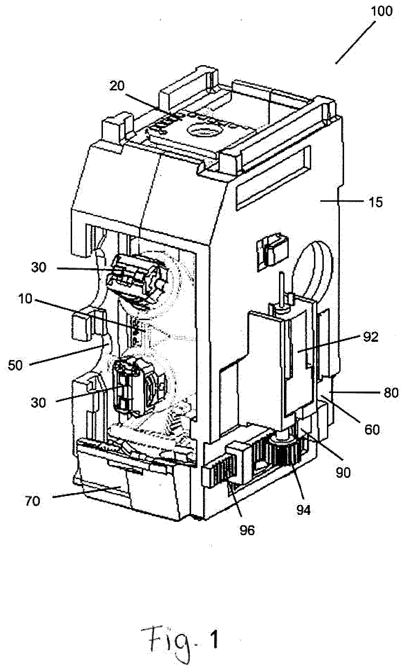

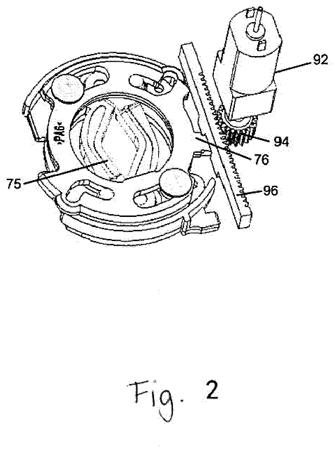

The laser leveling apparatus according to the invention will be described in detail with reference to Figure 1 and Figure 2. It can be understood by a skilled in the art that the drawings are given only for illustration and explanation purposes and do not intend to limit the scope of the invention. Components which are shown in the drawings are not necessary to present in all embodiments of the invention, and components which are not shown in the drawings may present in some embodiments of the invention.

In general, a laser leveling apparatus 100 as shown comprises a housing, which has been removed from Figure 1 for exposing functional components within the laser leveling apparatus 100, and a pendulum assembly 50 which is accommodated in the housing. The pendulum assembly 50 mainly comprises a pendulum 10 which is able to pivot or swing relative to the housing, a supporting subassembly 20 which is configured for supporting the pendulum 10 in the housing in a manner to allow the pendulum 10 to pivot or swing, and a laser emitting subassembly 30 mounted to the pendulum 10 to move with it and comprising one or more laser emitting element. Two laser emitting subassemblies 30 are shown in Figure 1. However, the number of the laser emitting subassemblies 30 and the number of laser emitting elements in each of the laser emitting subassemblies may differ according to actual demands, and the laser emitting element may be any suitable type of laser emitting element.

In addition, an auto locking system 80 is also provided for the laser leveling apparatus 100. The auto locking system 80 comprises an auto controller 60 and a pendulum lock 70. The pendulum lock 70 of the auto locking system 80 can be configured in any well-known manner, for example, in the form of two locking arms 75 as shown in Figure 2. The pendulum lock 70 has a locking state and an unlocking state, wherein in the locking state the two locking arms 75 grippes a portion of the pendulum 10, for example a locking cylinder of the pendulum which extends out of it downwards, and immobilizes it in center in a vertical direction, and wherein in the unlocking state the two locking arms 75 are moved away from the portion of the pendulum 10 to release it so that the pendulum 10 can move or tilt freely in any direction within a certain predetermined limit.

The auto controller 60 comprises a sensor (not shown) for detecting the movement of the pendulum 10, an electronic device for receiving a signal from the sensor indicating that the movement or tilting of the pendulum 10 goes beyond the predetermined limit and activating the pendulum lock 70, and an actuator device 90 by means of which the electronic device activates the pendulum lock 70 responsive to the signal from the sensor.

The sensor of the auto controller 60 can be any suitable type of sensor, such as an accelerometer, a contact detection sensor, an out of level (OOL) sensor, a MEMS sensor or any combination of them. The sensor is configured for detecting the movement of the pendulum 10, determining whether the movement of the pendulum 10 goes beyond the predetermined limit, and generates a signal indicating that the movement of the pendulum 10 goes beyond the predetermined limit when the movement of the pendulum 10 goes beyond the predetermined limit. The signal of the sensor is sent to the electronic device. For the laser leveling apparatus 100, the movement of the pendulum 10 is tilting, and the predetermined limit can be 6 degrees of tilting angle of the pendulum 10.

The electronic device of the auto controller 60 is configured for receiving the signal from the sensor indicating that the movement of the pendulum 10 goes beyond the predetermined limit, and instructing the actuator device 90 to activate the pendulum lock 70, and placing the pendulum lock 70 into its locking state so as to fix the pendulum in center in the vertical direction.

As an exemplary structure, as shown in the drawings, the actuator device 90 comprises a motor 92, a gear 94 and a rack 96, with the gear 94 engaged with an output shaft of the motor 92 and the rack 96 engaged with a portion 76 of the pendulum lock 70 to drive the lock arms 75. The electronic device, when receiving the signal indicating that the movement or tilting of the pendulum 10 goes beyond the predetermined limit, instructs the motor 92 to rotate in a counter clockwise direction to activate the pendulum lock 70, locking the pendulum 10 back to its center, which prevents the pendulum 10 from further moving or tilting and moves it back. Configuring the actuator device 90 as the gear and rack mechanism and configuring the pendulum lock 70 as including two locking arms 75 to grip the portion of the pendulum 10 are only exemplary embodiments, merely for the purposes of illustration and explanation. It can be understood to the skilled in the art that the actuator device 90 and the pendulum lock 70 can have any other suitable structure.

In addition, according to the invention, an unlocking device is also provided for a user to unlock the pendulum. For example, an electronic button can be provided to be pressed by the user so that a corresponding signal is sent to the motor to rotate it in a clockwise direction. In this way, the locking arms 75 can release the gripped portion of the pendulum 10 so as to place the pendulum in a state in which it can move freely.

According to the exemplary embodiment shown in the drawings, a stand 15 is provided for supporting the auto locking system 80 and the pendulum 10 so that they can move together.

The laser leveling apparatus 100 with the auto locking system 80 has been described as above. In the following, there is described a method of automatically locking the pendulum 10 when it is determined that the moving or tilting of pendulum 10 is beyond the predetermined limit.

In the method of the invention, the key and inventive step is, using the auto locking system 80 of the laser leveling apparatus 100, placing the pendulum lock 70 into the locking state automatically when the movement of the pendulum 10 goes beyond the predetermined limit.

In particular, a first step of the method comprises, by means of the sensor of the auto controller 60 of the auto locking system 80, detecting the movement of the pendulum 10 of the laser leveling apparatus 100, determining if it goes beyond the predetermined limit, and sending a corresponding signal to the electronic device of the auto controller 60 when the movement of the pendulum 10 of the laser leveling apparatus 100 goes beyond the predetermined limit.

In this step, if the sensor is an OOL sensor, two OOL limits are set for the pendulum 10, in which a first one of the OOL limits is for laser emitted by the laser emitting element and a second one is for the detection purpose. The second OOL limit is larger or higher than the first OOL limit. The fact that the movement of the pendulum 10 of the laser leveling apparatus 100 goes beyond the second OOL limit can be interpreted as the laser leveling apparatus 100 is shocked or is dropping. If the sensor is a MEM sensor, the MEM sensor senses the gravity force experienced by the laser leveling apparatus 100 and thus detects the free fall of the laser leveling apparatus 100 during its dropping and triggers or activates the pendulum lock 70 of the auto locking system 80, in order to lock the pendulum 10 promptly before it drops or hits an impact surface.

In general, the fact that the movement or tilting of the pendulum 10 goes beyond the predetermined limit occurs when the laser leveling apparatus 100 is shocked or pushed or pulled accidentally, for example, when the laser leveling apparatus 100 is placed on a floor or table or tripod. The invention is advantageous when the tool experiences an impact which can damage the accuracy of the device or when the operator is in break time and the operation of the laser leveling apparatus 100 is in a time-out period. Losing the reference which has been used during operation can be reliably avoided and the operation can be continued with the same accuracy.

The principle of the invention can be applied to any type of laser levelling apparatuses, including, but not limited to, a line or surface laser levelling apparatus.

The laser leveling apparatus of the invention can be used in many fields, such as measuring, construction, transportation, decoration etc. for arranging, aligning or adjusting a multiple of objects at constant or varying intervals. The objects can be pictures, borders, wallpapers, tiles or any other objects in these fields.

The laser levelling apparatus according to the invention has been described with reference to the preferred embodiments shown in the drawings. However, it should be understood by the skilled in the art that the invention is not intended to be limited to the detail structure and form shown in the drawings and described as above. Instead, various amendments, variants, omission or modifications can be made without departing from the scope of the invention defined by the attached claims. These amendments, variants, omission or modifications should be considered as falling within the protecting scope of the invention.

## Claims

1. A laser leveling apparatus (100) with an auto locking system (80), comprising:
a housing;
a pendulum assembly (50) in the housing, wherein the pendulum assembly (50) comprises a pendulum (10) and a supporting subassembly (20) supporting the pendulum (10) in the housing in such a manner that the pendulum (10) can pivot or swing relative to the housing; and
the auto locking system (80) in the housing which comprises a pendulum lock (70) and an auto controller (60), wherein the pendulum lock (70) has a locking state in which the pendulum lock (70) locks the pendulum (10) in position and immobilizes the pendulum (10) and an unlocking state in which the pendulum (10) is allowed to move, and wherein the auto controller (60) places the pendulum lock (70) into the locking state automatically when the movement of the pendulum (10) goes beyond a predetermined limit.

2. The laser leveling apparatus (100) according to claim 1, **characterized in that** the auto controller (60) comprises a sensor and an electronic device, wherein the sensor detects the movement of the pendulum (10) and sends a signal indicating the movement of the pendulum (10) goes beyond the predetermined limit to the electronic device when the movement of the pendulum (10) goes beyond the predetermined limit, and the electronic device places the pendulum lock (70) into the locking state automatically responsive to receiving the signal from the sensor.

3. The laser leveling apparatus (100) according to claim 2, **characterized in that** the auto controller (60) further comprises an actuator device (90) via which the electronic device activates the pendulum lock (70) to place it into the locking state.

4. The laser leveling apparatus according to claim 3, **characterized in that** the actuator device (90) comprises a motor (92) which is configured to be controlled by the electronic device and a transmission mechanism which is configured to be connected with both an output shaft of the motor (92) and the pendulum lock (70).

5. The laser leveling apparatus according to claim 4, **characterized in that** the transmission mechanism comprises a gear (94) driven by the output shaft of the motor (92) and a rack (96) connected with both the gear (94) and at least a portion (76) of the pendulum lock (70).

6. The laser leveling apparatus according to any one of claims 1-5, **characterized in that** the laser leveling apparatus (100) further comprises an unlocking device which is configured for unlocking the pendulum lock (70) from the locking state to the unlocking state.

7. The laser leveling apparatus according to any one of claims 1-6, **characterized in that** the pendulum lock (70) comprises two locking arms (75) which grip a portion (76) of the pendulum (10) extending out of the pendulum (10) downwards in the locking state and which move away from the portion of the pendulum (10) to allow the pendulum (10) to move freely in the unlocking state.

8. The laser leveling apparatus according to any one of claims 1-7, **characterized in that** the predetermined limit is 6 degrees of tilting angle of the pendulum (10).

9. The laser leveling apparatus according to any one of claims 2-8, **characterized in that** the sensor comprises at least one of an accelerometer, a contact detection sensor, a MEMS sensor and an OOL sensor.

10. An auto locking method of a laser leveling apparatus according to any one of claims 1-9, comprising, using the auto locking system (80) of the laser leveling apparatus(100), placing the pendulum lock (70) into the locking state automatically when the movement of the pendulum (10) goes beyond a predetermined limit.

11. The auto locking method according to claim 10, **characterized in that** the movement of the pendulum (10) is detected by an OOL sensor, and that the pendulum (10) has two OOL limits, one of which is for laser emitted from a laser emitting element mounted in the pendulum (10) and the other is the predetermined limit.

12. The auto locking method according to claim 10, **characterized in that** the movement of the pendulum (10) is detected by a MEM sensor which is configured for sensing the gravity force of the laser leveling apparatus (100).
